# EUROPEAN PATENT APPLICATION

(11) **EP 4 276 732 A1**
(43) Date of publication of application: **15.11.2023**
(21) Application number: 23171591.3
(22) Date of filing: 04.05.2023
(51) Int. Cl.: G06Q 50/26, B60R 25/31

(54) **ARTIFICIAL INTELLIGENCE ENABLED VEHICLE SECURITY ASSESSMENT**

(30) Priority: 10.05.2022 US 202217662727
(71) Applicant: Volvo Car Corporation, 405 31 Göteborg (SE)
(72) Inventor: KOPPISETTY, Ashok Chaitanya, 40531 Göteborg (SE); NILSSON, Robert, 40531 Göteborg (SE)
(74) Representative: Maiwald GmbH

(57) **Abstract**

Techniques regarding vehicle security assessments are provided. For example, one or more embodiments described herein can comprise a system, which can further comprise a processor that can execute computer executable components stored in memory. The system can also comprise a security component that can determine a risk metric associated with a vehicle at a defined time based on an artificial intelligence model. The risk metric can characterize a probability that the vehicle, or an entity in proximity to the vehicle, will be subject to a security risk based on sensory data collected by the vehicle.

## Description

### TECHNICAL FIELD

Embodiments disclosed and claimed herein relate to employing one or more artificial intelligence ("AI") models to assess the security of a vehicle, or an entity in proximity to the vehicle, based on vehicle sensory data.

### BACKGROUND

Vehicles can be subject to various security risks during operation or while unattended. Vehicle operators may be unable to properly assess security risks due to a lack of contextual knowledge. For example, the vehicle can transport occupants to unfamiliar destinations, where the occupants' lack of experience with the area can inhibit risk assessments. For instance, an area's history of criminal activity can be unknown to a visiting driver. In another instance, vehicle occupants can be unaware of a natural disaster (e.g., a fire) occurring near the vehicle's current location.

Additionally, the security of a vehicle can change while unattended. For example, absent an operator's supervision, a vehicle can be burglarized and/or vandalized. Likewise, unattended property in proximity to the vehicle can be subject to one or more malicious acts. Detecting and mitigating potential security risks can help ensure the safety of the vehicle, property near the vehicle, and/or occupants of the vehicle. However, a predictive analysis can be inhibited by the vehicle operator's lack of contextual knowledge, and risk recognition can be prohibited by an absence of the vehicle operator during a security risk.

### SUMMARY

The following presents a summary to provide a basic understanding of one or more embodiments of the invention. This summary is not intended to identify key or critical elements, or delineate any scope of the particular embodiments or any scope of the claims. Its sole purpose is to present concepts in a simplified form as a prelude to the more detailed description that is presented later. In one or more embodiments described herein, systems, computer-implemented methods, apparatuses and/or computer program products that facilitate autonomously determining the security of a vehicle, or an entity in proximity to the vehicle, are described.

According to an embodiment, a system for assessing vehicle security is provided. The system can comprise a processor that can execute computer executable components stored in memory. The system can comprise a security component that determines a risk metric associated with a vehicle at a defined time based on an artificial intelligence model. The risk metric can characterize a probability that the vehicle, or an entity in proximity to the vehicle, will be subject to a security risk based on sensory data collected by the vehicle.

In some implementations, the system can further comprise a surveillance component that can monitor the sensory data and/or identify one or more event parameters associated with the vehicle or the entity at the defined time based on the sensory data. Also, the system can comprise a categorization component that can employ the artificial intelligence model to categorize the one or more event parameters to a defined event. The categorization component can further label the defined event as the security risk or security non-risk event. In one or more implementations, the system can also comprise a security level component that can determine a probability value associated with the defined event based on the one or more event parameters categorized to the defined event. For example, the security level component can determine the risk metric based on the defined event and the probability value.

In some embodiments, elements described in connection with the disclosed systems can be embodied in different forms such as a computer-implemented method, a computer program product, or another form.

### DESCRIPTION OF THE DRAWINGS

FIG. 1 illustrates a block diagram of an example, non-limiting system that can detect and/or mitigate security risks to a vehicle, and/or an entity in proximity to the vehicle, in accordance with one or more embodiments described herein.
FIG. 2 illustrates a block diagram of an example, non-limiting system that can comprise computer executable components to determine one or more risk metrics based on sensory data collected from a vehicle in accordance with one or more embodiments described herein.
FIG. 3 illustrates a block diagram of an example, non-limiting system that can comprise computer executable components that can identify and/or categorize event parameters derived from sensory data collected from a vehicle in accordance with one or more embodiments described herein.
FIG. 4 illustrates a diagram of an example, non-limiting knowledge graph that can be employed by one or more AI models to facilitate identification and/or categorization of event parameters from sensory data collected from a vehicle in accordance with one or more embodiments described herein.
FIG. 5 illustrates a block diagram of an example, non-limiting system that can comprise computer executable components that can determine one or more risk metric values that can characterize a likelihood that a vehicle will be subject to a security risk in accordance with one or more embodiments described herein.
FIG. 6 illustrates a block diagram of an example, non-limiting system that can comprise computer executable components that can facilitate one or more supervised learning processes to improve the performance of one or more AI models in accordance with one or more embodiments described herein.
FIG. 7 illustrates a block diagram of an example, non-limiting system that can comprise computer executable components that can present one or more risk metric evaluations to one or more persons associated with a vehicle in accordance with one or more embodiments described herein.
FIGs. 8-12 illustrate high-level flow diagrams of example, non-limiting computer-implemented methods that can exemplify one or more applications of a system that can detect and/or mitigate security risks to vehicle, and/or an entity in proximity to the vehicle, in accordance with one or more embodiments described herein.
FIG. 13 illustrates a high-level flow diagram of an example, non-limiting computer-implemented method that can determine one or more risk metrics based on identified and/or categorized event parameters derived from sensory data collected from a vehicle in accordance with one or more embodiments described herein.
FIG. 14 illustrates a block diagram of an example, non-limiting operating environment in which one or more embodiments described herein can be facilitated.

### DETAILED DESCRIPTION

The following detailed description is merely illustrative and is not intended to limit embodiments and/or application or uses of embodiments. Furthermore, there is no intention to be bound by any expressed or implied information presented in the preceding Background or Summary sections, or in the Detailed Description section.

Given the problems of traditional vehicle security assessments discussed above; the present disclosure can be implemented to produce a solution to one or more of these problems in the form of AI enabled security assessments based on sensory data collected by the vehicle. Various embodiments described herein can be directed to employing one or more AI models to determine a risk metric associated with a vehicle at a given time. For example, the vehicle can comprise various sensors that can collect sensory data regarding, for instance, the state of the vehicle, the operating condition of the vehicle, the vehicle's surroundings, and/or objects in proximity to the vehicle. Further, various embodiments can include the identification of one or more event parameters from the sensory data and/or auxiliary data from one or more external data sources. One or more AI models can be utilized to categorize the event parameters into one or more defined event categories, which can be further labeled as risk or non-risk events. Based on the event parameter identification and/or categorization, one or more embodiments can comprise determining a probability that the vehicle, or an object in proximity to the vehicle, has been subject to, or will likely be subject to, a security risk. Further, the determined probability can be presented as a risk metric for evaluation by one or more entities, such as an entity associated with the vehicle (e.g., the vehicle operator).

In one or more embodiments, the risk metric can be presented to an operator of the vehicle while the vehicle is being operated. Thereby, the situational awareness of the vehicle operator can be enhanced by autonomous determinations that leverage one or more AI models to detect and/or mitigate security risks. In various embodiments, the one or more AI models can be periodically trained on sensory data collected by the vehicle. Additionally, the one or more AI models can identify patterns in collected sensory data to recommend novel event categorizations (e.g., which can be implemented via one or more supervised learning processes). Mover, event identification and/or categorization can be determined from a pool of sensory data collected from a collective of vehicles to facilitate a security assessment regarding one or more entities (e.g., objects such as another vehicle or property) in proximity to the vehicle collective.

The computer processing systems, computer-implemented methods, apparatus and/or computer program products described herein employ hardware and/or software to solve problems that are highly technical in nature (e.g., autonomous vehicle security assessment), that are not abstract and cannot be performed as a set of mental acts by a human. For example, a human, or even a plurality of humans, cannot efficiently, accurately and effectively manually analyze vehicle sensory data while operating the vehicle with the same level of accuracy and/or efficiency as the various embodiments described herein. For instance, one or more embodiments described herein can analyze and/or process a vast amount of content (e.g., including sensory data collected from multiple vehicles and the like) while a vehicle is operating. Further, said vast amount of content can be updated, prioritized, and/or modified during travel.

Also, one or more embodiments described herein can constitute a technical improvement over conventional risk assessment techniques by utilizing vehicle sensory data to detect and/or mitigate security risks absent contextual knowledge by the vehicle operator. Further, one or more embodiments described herein can have a practical application by presenting a risk assessment associated with the vehicle via a risk metric based on the probability of one or more events related to measurable observations. One or more embodiments described herein can control various sensors of a vehicle based on event recognition and/or influence one or more classification and/or categorization protocols employed by one or more AI models.

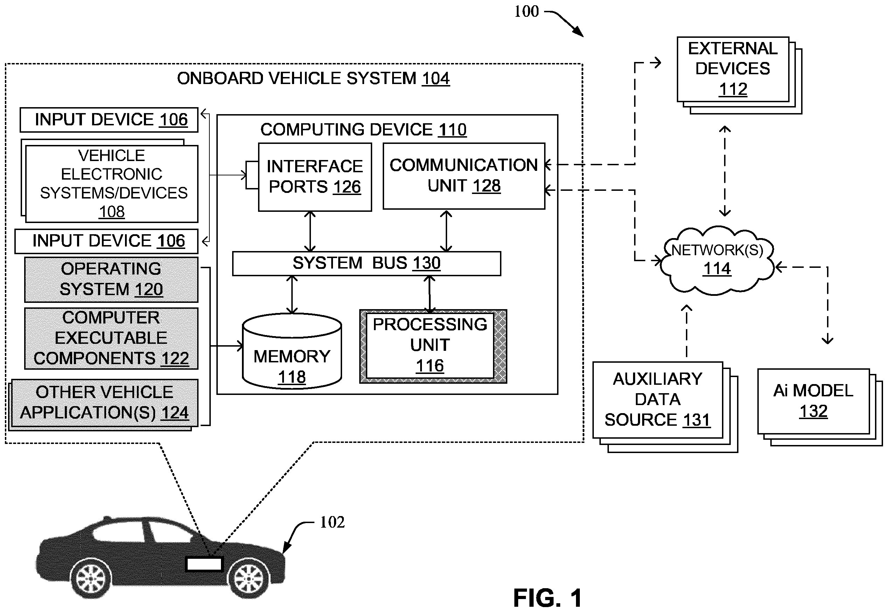

FIG. 1 illustrates a block diagram of an example, non-limiting system 100 that facilitates detecting, predicting, and/or mitigating one or more security risks associated with a vehicle and/or property in proximity to the vehicle in accordance with one or more embodiments described herein. In accordance with various exemplary embodiments, system 100 can be deployed on or within a vehicle 102, (e.g., an automobile, as shown in FIG. 1), to facilitate presenting a risk assessment associated with the vehicle 102. Although FIG. 1 depicts the vehicle 102 as an automobile, the architecture of the system 100 is not so limited. For instance, the system 100 described herein can be implemented with a variety of types of vehicles 102. Example vehicles 102 that can incorporate the exemplary system 100 can include, but are not limited to: automobiles, airplanes, trains, motorcycles, carts, trucks, semi trucks, buses, boats, recreational vehicles, helicopters, scooters, a combination thereof, and/or the like.

As shown in FIG. 1, the system 100 can comprise one or more onboard vehicle systems 104, which can include one or more input devices 106, one or more other vehicle electronic systems and/or devices 108, one or more sensors 109, and/or one or more computing devices 110. Additionally, the system 100 can comprise one or more external devices 112 that can be communicatively and/or operatively coupled to the one or more computing devices 110 of the one or more onboard vehicle systems 104 either via a one or more networks 114 and/or a direct electrical connection (e.g., as shown in FIG. 1).

The one or more input devices 106 can display one or more interactive graphic entity interfaces ("GUIs") that facilitate accessing and/or controlling various functions and/or application of the vehicle 102. The one or more input devices 106 can display one or more interactive GUIs that facilitate accessing and/or controlling various functions and/or applications. The one or more input devices 106 can comprise one or more computerized devices, which can include, but are not limited to: personal computers, desktop computers, laptop computers, cellular telephones (e.g., smart phones), computerized tablets (e.g., comprising a processor), smart watches, keyboards, touchscreens, mice, a combination thereof, and/or the like. An entity of the system 100 can utilize the one or more input devices 106 to input data into the system 100. Additionally, the one or more input devices 106 can comprise one or more displays that can present one or more outputs generated by the system 100 to an entity. For example, the one or more displays can include, but are not limited to: cathode tube display ("CRT"), light-emitting diode display ("LED"), electroluminescent display ("ELD"), plasma display panel ("PDP"), liquid crystal display ("LCD"), organic light-emitting diode display ("OLED"), a combination thereof, and/or the like.

For example, the one or more input devices 106 can comprise a touchscreen that can present one or more graphical touch controls that can respectively correspond to a control for a function of the vehicle 102, an application, a function of the application, interactive data, a hyperlink to data, and the like, wherein selection and/or interaction with the graphical touch control via touch activates the corresponding functionality. For instance, one or more GUIs displayed on the one or more input devices 106 can include selectable graphical elements, such as buttons or bars corresponding to a vehicle navigation application, a media application, a phone application, a back-up camera function, a car settings function, a parking assist function, and/or the like. In some implementations, selection of a button or bar corresponding to an application or function can result in the generation of a new window or GUI comprising additional selectable icons or widgets associated with the selected application. For example, selection of the media application can result in generation of a new GUI or window that includes additional buttons or widgets for different media sources (e.g., radio, a streaming music system, music from an auxiliary input device or phone, etc.), different radio stations, volume controls, and the like. The type and appearance of the controls can vary. For example, the graphical touch controls can include icons, symbols, widgets, windows, tabs, text, images, a combination thereof, and/or the like.

The one or more input devices 106 can comprise suitable hardware that registers input events in response to touch (e.g., by a finger, stylus, gloved hand, pen, etc.). In some implementations, the one or more input devices 106 can detect the position of an object (e.g., by a finger, stylus, gloved hand, pen, etc.) over the one or more input devices 106 within close proximity (e.g., a few centimeters) to touchscreen without the object touching the screen. As used herein, unless otherwise specified, reference to "on the touchscreen" refers to contact between an object (e.g., an entity's finger) and the one or more input devices 106 while reference to "over the touchscreen" refers to positioning of an object within close proximity to the touchscreen (e.g., a defined distance away from the touchscreen) yet not contacting the touchscreen.

The type of the input devices 106 can vary and can include, but is not limited to: a resistive touchscreen, a surface capacitive touchscreen, a projected capacitive touchscreen, a surface acoustic wave touchscreen, and an infrared touchscreen. In various embodiments, the one or more input devices 106 can be positioned on the dashboard of the vehicle 102, such as on or within the center stack or center console of the dashboard. However, the position of the one or more input devices 106 within the vehicle 102 can vary.

The one or more other vehicle electronic systems and/or devices 108 can include one or more additional devices and/or systems (e.g., in addition to the one or more input devices 106 and/or computing devices 110) of the vehicle 102 that can be controlled based at least in part on commands issued by the one or more computing devices 110 (e.g., via one or more processing units 116) and/or commands issued by the one or more external devices 112 communicatively coupled thereto. For example, the one or more other vehicle electronic systems and/or devices 108 can include: a media system (e.g., audio and/or video); a back-up camera system; a heating, ventilation, and air conditioning ("HVAC") system; a lighting system; a cruise control system, a power locking system, a navigation system, an autonomous driving system, a vehicle sensor system, a combination thereof, and/or the like.

In various embodiments, the one or more sensors 109 can include one or more sensor devices positioned on and/or within the vehicle 102. The one or more sensors 109 can include sensor devices coupled to the vehicle 102 and/or integrated with the vehicle 102. In one or more embodiments, the one or more sensors 109 can collect sensory data to be shared with other components of the onboard vehicle system 104, the communication unit 128, and/or stored in the memory 118. The sensory data can regard, for example: operation of the vehicle 102, surroundings of the vehicle 102, one or more entities (e.g., property, objects, and/or persons) in proximity to the vehicle 102, attributes of entities in proximity to the vehicle 102, a combination thereof, and/or the like. For instance, the one or more sensors 109 can collect sensory data delineating, for example: a geographical location of the vehicle 102, weather conditions surrounding the vehicle 102, lighting conditions surrounding the vehicle 102, objects in proximity to the vehicle 102, motion near the vehicle 102, velocity of objects near the vehicle 102, size of objects near the vehicle 102, distance of objects from the vehicle 102, a combination thereof, and/or the like. Example types of sensors 109 can include, but are not limited to: accelerometers, cameras (e.g., digital cameras, night vision cameras, infrared cameras, still cameras, motion cameras, and/or the like), pressure sensors, radar sensors (e.g., for short-range radar ("SRR"), blind-spot detection ("BSD"), lane-change assistance ("LCA"), medium-range radar ("MRR"), frequency-modulated continuous-wave ("FMCW") radar, and/or the like), light detection and ranging ("LiDAR") sensors, temperature sensors, moisture sensors, light sensors, microphones, a combination thereof, and/or the like.

The one or more computing devices 110 can facilitate executing and controlling one or more operations of the vehicle 102, including one or more operations of the one or more input devices 106, and the one or more other vehicle electronic systems/devices 108 using machine-executable instructions. In this regard, embodiments of system 100 and other systems described herein can include one or more machine-executable components embodied within one or more machines (e.g., embodied in one or more computer readable storage media associated with one or more machines, such as computing device 110). Such components, when executed by the one or more machines (e.g., processors, computers, virtual machines, etc.) can cause the one or more machines to perform the operations described.

For example, the one or more computing devices 110 can include or be operatively coupled to at least one memory 118 and/or at least one processing unit 116. The one or more processing units 116 can be any of various available processors. For example, dual microprocessors and other multiprocessor architectures also can be employed as the processing unit 116. In various embodiments, the at least one memory 118 can store software instructions embodied as functions and/or applications that when executed by the at least one processing unit 116, facilitate performance of operations defined by the software instruction. In the embodiment shown, these software instructions can include one or more operating system 120, one or more computer-executable components 122, and/or one or more other vehicle applications 124. For example, the one or more operating systems 120 can act to control and/or allocate resources of the one or more computing devices 110. It is to be appreciated that the claimed subject matter can be implemented with various operating systems or combinations of operating systems.

The one or more computer executable components 122 and/or the one or more other vehicle applications 124 can take advantage of the management of resources by the one or more operating systems 120 through program modules and program data also stored in the one or more memories 118. The one or more computer executable components 122 can provide various features and/or functionalities that can facilitate determining a risk metric associated with the vehicle 102, one or more entity preferences, and/or controlling the one or more other vehicle applications 124. Example, other vehicle applications 124 can include, but are not limited to: a navigation application, a media player application, a phone application, a vehicle settings application, a parking assistance application, an emergency roadside assistance application, a combination thereof, and/or the like. The features and functionalities of the one or more computer executable components 122 are discussed in greater detail infra.

The one or more computing devices 110 can further include one or more interface ports 126, one or more communication units 128, and a system bus 130 that can communicatively couple the various features of the one or more computing devices 110 (e.g., the one or more interface ports 126, the one or more communication units 128, the one or more memories 118, and/or the one or more processing units 116). The one or more interface ports 126 can connect the one or more input devices 106 (and other potential devices) and the one or more other vehicle electronic systems/devices 108 to the one or more computing devices 110. For example, the one or more interface ports 126 can include, a serial port, a parallel port, a game port, a universal serial bus ("USB") and the like.

The one or more communication units 128 can include suitable hardware and/or software that can facilitate connecting one or more external devices 112 to the one or more computing devices 110 (e.g., via a wireless connection and/or a wired connection). For example, the one or more communication units 128 can be operatively coupled to the one or more external devices 112 via one or more networks 114. The one or more networks 114 can include wired and/or wireless networks, including but not limited to, a personal area network ("PAN"), a local area network ("LAN"), a cellular network, a wide area network ("WAN", e.g., the Internet), and the like. For example, the one or more external devices 112 can communicate with the one or more computing devices 110 (and vice versa) using virtually any desired wired or wireless technology, including but not limited to: wireless fidelity ("Wi-Fi"), global system for mobile communications ("GSM"), universal mobile telecommunications system ("UMTS"), worldwide interoperability for microwave access ("WiMAX"), enhanced general packet radio service (enhanced "GPRS"), fifth generation partnership project ("5G") communication system, third generation partnership project ("3GPP") long term evolution ("LTE"), third generation partnership project 2 ("3GPP2") ultra- mobile broadband ("UMB"), high speed packet access ("HSPA"), Zigbee and other wireless technologies and/or legacy telecommunication technologies, near field communication ("NFC") technology, BLUETOOTH^{®}, Session Initiation Protocol ("SIP"), ZIGBEE^{®}, RF4CE protocol, WirelessHART protocol, 6LoWPAN (IPv6 over Low power Wireless Area Networks), Z-Wave, an ANT, an ultra-wideband ("UWB") standard protocol, and/or other proprietary and non-proprietary communication protocols. In this regard, the one or more communication units 128 can include software, hardware, or a combination of software and hardware that is configured to facilitate wired and/or wireless communication between the one or more computing devices 110 and the one or more external devices 112. While the one or more communication units 128 are shown for illustrative clarity as a separate unit that is not stored within memory 118, it is to be appreciated that one or more (software) components of the communication unit 128 can be stored in memory 118 and include computer executable components 122.

The one or more external devices 112 can include any suitable computing device (e.g., comprising a display and/or means for data entry, such as a touchscreen) that can communicate with the one or more computing devices 110 comprised within the onboard vehicle system 104 and interface with the one or more computer executable components 122 (e.g., using a suitable application program interface ("API")). For example, the one or more external devices 112 can include, but are not limited to: a mobile phone, a smartphone, a tablet personal computer ("PC"), a digital assistant ("PDA"), a heads-up display ("HUD"), virtual reality ("VR") headset, an augmented reality ("AR") headset, or another type of wearable computing device, a desktop computer, a laptop computer, a computer tablet, a combination thereof, and the like. In various embodiments, one or more of the external devices 112 can be operated by one or more persons associated with the vehicle 102 (e.g., a vehicle 102 owner). Additionally, one or more of the external devices 112 can be operated by one or more third parties, such as entities of authorities (e.g., law enforcement organizations).

In one or more embodiments, one or more auxiliary data sources 131 can further be in communication with the one or more networks 114, the onboard vehicle system 104, the external devices 112, and/or one or more AI models 132. The one or more auxiliary data sources 131 can provide additional data regarding the vehicle 102 and/or an environment in which the vehicle 102 is located, near, and/or destined to travel. For instance, the one or more auxiliary data sources 131 can provide, for example: weather reports, maps, news (e.g., news alerts), alerts from authorities (e.g., alerts of a recent crime, civil unrest, a natural disaster, and/or the like), updates regarding transit obstacles (e.g., reports of roadwork), data provided by infrastructure (e.g., light signals and/or signs), a combination thereof, and/or the like.

Additionally, one or more AI models 132 can be in communication with the one or more networks 114 and/or the onboard vehicle system 104. In various embodiments, the one or more AI models 132 can operate in conjunction with the onboard vehicle system 104 (e.g., with the one or more computer executable components 122) to assess the security of the vehicle 102 at a given time and/or determine the value of a risk metric that characterizes a probability that the vehicle 102, or entity in proximity to the vehicle 102, will be subject to a security risk based on sensory data collected by the vehicle 102. As used herein, the term "AI model" can refer to a computer model that can be used to facilitate one or more machine learning tasks, wherein the computer model can simulate a number of interconnected processing units that can resemble abstract versions of neurons. Further, as used herein, the term "machine learning task" can refer to an application of AI technologies to automatically and/or autonomously learn and/or improve from an experience (e.g., training data) without explicit programming of the lesson learned and/or improved. For example, machine learning tasks can utilize one or more algorithms to facilitate supervised and/or unsupervised learning to perform tasks such as classification, regression, and/or clustering. Execution of a machine learning task can be facilitated by one or more artificial intelligence models trained on one or more datasets in accordance with one or more model configuration settings.

In one or more embodiments, the one or more AI models 132 can comprise one or more processing units that can be arranged in a plurality of layers (e.g., one or more input layers, one or more hidden layers, and/or one or more output layers) connected with by varying connection strengths (e.g., which can be commonly referred to within the art as "weights"). Neural network models can learn through training, wherein data with known outcomes is inputted into the computer model, outputs regarding the data are compared to the known outcomes, and/or the weights of the computer model are autonomous adjusted based on the comparison to replicate the known outcomes. As used herein, the term "training data" can refer to data and/or data sets used to train one or more AI models 132. As the AI model 132 trains (e.g., utilizes more training data), the computer model can become increasingly accurate; thus, trained AI models 132 can accurately analyze data with unknown outcomes, based on lessons learning from training data, to facilitate one or more machine learning tasks. Example AI models 132 can include, but are not limited to: perceptron ("P"), feed forward ("FF"), radial basis network ("RBF"), deep feed forward ("DFF"), recurrent neural network ("RNN"), long/short term memory ("LSTM"), gated recurrent unit ("GRU"), auto encoder ("AE"), variational AE ("VAE"), denoising AE ("DAE"), sparse AE ("SAE"), markov chain ("MC"), Hopfield network ("HN"), Boltzmann machine ("BM"), deep belief network ("DBN"), deep convolutional network ("DCN"), deconvolutional network ("DN"), deep convolutional inverse graphics network ("DCIGN"), generative adversarial network ("GAN"), liquid state machine ("LSM"), extreme learning machine ("ELM"), echo state network ("ESN"), deep residual network ("DRN"), kohonen network ("KN"), support vector machine ("SVM"), and/or neural turing machine ("NTM").

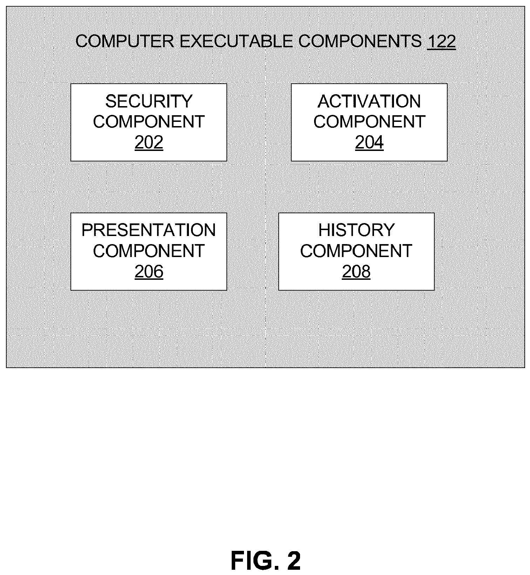

FIG. 2 illustrates a block diagram of example, non-limiting computer executable components 122 that can facilitate detecting and/or mitigating one or more security risks associated with the vehicle 102 in accordance with one or more embodiments described herein. Repetitive description of like elements employed in other embodiments described herein is omitted for sake of brevity. As shown in FIG. 2, the one or more computer executable components 122 can include security component 202, activation component 204, presentation component 206, and/or history component 208.

In various embodiments, the security component 202 can determine one or more risk metrics associated with the vehicle 102 at a defined time based on the one or more AI models 132. Further, the one or more risk metrics can characterize a probability that the vehicle 102, people near the vehicle 102, and/or property near the vehicle 102 will be subject to a security risk based on sensory data collected by the one or more sensors 109 and/or auxiliary data provided by the one or more auxiliary data sources 131. For example, the security component 202 can monitor sensory data collected by the sensors 109 to identify one or more event parameters, which can characterize one or more events associated with the vehicle 102. Further, the security component 202 can employ the one or more AI models 132 to categorize the one or more event parameters into one or more defined events, which can be labeled as security risks or non-risks. Additionally, the one or more categorized events can be assigned one or more probability values based on historical patterns and/or relations learned by the one or more AI models 132, where the probability values can characterize a likelihood that the vehicle 102, or a nearby object, will experience the security risk based on the observed event parameters (e.g., derived from sensory data and/or auxiliary data). Moreover, the security component 202 can determine the one or more risk metrics based on the categorized events and/or probability values, where the risk metrics can be presented via one or more displays associated with the vehicle 102 (e.g., comprised within the one or more input devices 106 and/or external devices 112) to inform one or more persons associated with the vehicle 102 (e.g., a vehicle 102 operator).

In one or more embodiments, the activation component 204 can activate one or more functions of the onboard vehicle system 104. For example, the activation component 204 can activate the functionality of the one or more sensors 109 and/or the security component 202 based on the occurrence of one or more triggers. For instance, the activation component 204 can initiate the operation of one or more inactive sensors 109 to collect additional sensory data. In various embodiments, the activation component 204 can activate functions in response to, for example: a defined schedule, an operating condition of the vehicle 102, reception of auxiliary data from the one or more auxiliary data sources 131, a location of the vehicle 102, an observed event in proximity to the vehicle 102 (e.g., motion near an identified object being monitored by the vehicle 102), a combination thereof, and/or the like.

In one or more embodiments, the activation component 204 can activate various functionalities based on one or more event parameter detections made by the security component 202. For example, at a first time interval, a subset of the sensors 109 can be active while the remaining sensors 109 can be inactive. For instance, while the vehicle is idle (e.g., not being operated) a subset of cameras can be active while other sensors 109 (e.g., accelerometers, temperature sensors, one or more radar sensors, pressure sensors, and/or the like) can be inactive to conserve power and/or meet regulatory compliance (e.g., privacy interests). During the first time interval, sensory data can be collected by the active sensors 109 and analyzed by the security component 202. Based on the security component 202 identifying one or more event parameters that can be associated with a security risk, the activation component 204 can activate additional sensors 109. The newly activated sensors 109 can thereby collect additional sensory data, which can better inform one or more categorizations of the one or more AI models 132 and/or determinations by the security component 202.

In one or more embodiments, the activation component 204 can activate various functionalities of the one or more sensors 109 and/or security component 202 based on one or more preferences defined by an entity employing the system 100 (e.g., the vehicle 102 operator). Preferences can be entered into the system 100 using, for example, the one or more input devices 106 and/or external devices 112. For example, the one or more preferences can define an activation schedule for one or more of the sensors 109. In another example, the one or more preferences can be employed to remotely activate one or more sensors 109 of the vehicle 102 (e.g., via an external device 112, such as a smart wearable device).

In one or more embodiments, the activation component 204 can activate various functionalities of the one or more sensors 109 and/or security component 202 based on an operating condition of the vehicle 102. For example, the activation component 204 can activate one or more sensors 109 based on engine ignition. In another example, the activation component 204 can activate one or more sensors 109 based on the speed and/or location of the vehicle 102. In a further example, the activation component 204 can activate one or more sensors 109 based on weather conditions.

Additionally, in one or more embodiments the activation component 204 can activate various functionalities of the one or more sensors 109 and/or security component 202 based on auxiliary data from the one or more auxiliary data sources 131. For example, the activation component 204 can activate one or more sensors 109 based on a crime alert issued by one or more auxiliary data sources 131 associated with an authoritative entity (e.g., a police organization). In another example, the activation component 204 can activate one or more sensors 109 based on a natural disaster warning issued by one or more auxiliary data sources 131 (e.g., reports of a fire, flood, earthquake, tornado, and/or the like from a weather organization).

Further, in various embodiments, the presentation component 206 can generate one or more reports generated and/or received by the one or more computer executable components 122. For example, the one or more reports can comprise one or more risk metrics determined by the security component 202. In another example, the one or more reports can include sensory data (e.g., video clips) collected by the one or more sensors 109. In a further example, the one or more reports can include auxiliary data received from the one or more auxiliary data sources 131. The reports can be display via, for example, the one or more input devices 106 and/or external devices 112 to inform one or more persons associated with the vehicle 102 (e.g., a vehicle 102 operator).

In various embodiments, the history component 208 can store data such as: sensory data collected by the sensors 109, auxiliary data received from the auxiliary data sources 131, and/or reports generated by the presentation component 206. For example, the history component 208 can store the data in the one or more memories 118. Further, the history component 208 can store the data for a defined length of time (e.g., the history component 208 can delete historic data once the defined length of time has expired). In one or more embodiments, the history component 208 can also store the data in one or more data repositories external to the vehicle 102 (e.g., via the one or more networks 114).

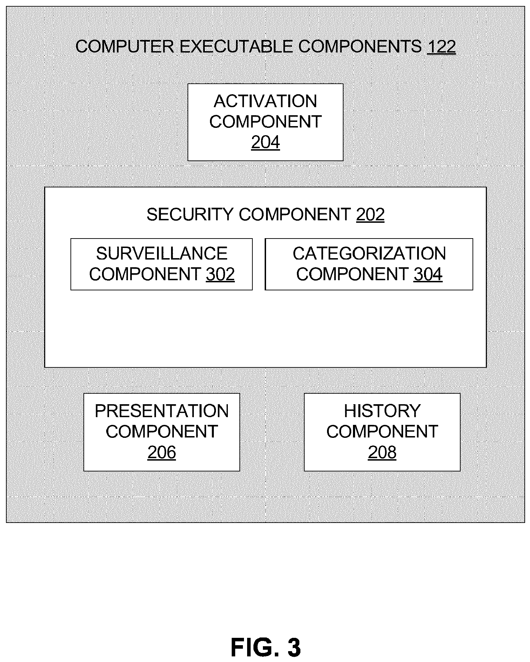

FIG. 3 illustrates a block diagram of example, non-limiting computer executable components 122 that can facilitate the identification and/or categorization of events associated with the vehicle 102 in accordance with one or more embodiments described herein. Repetitive description of like elements employed in other embodiments described herein is omitted for sake of brevity. As shown in FIG. 3, the security component 202 can comprise surveillance component 302 and/or categorization component 304.

The surveillance component 302 can monitor the sensory data collected from the one or more sensors 109 and/or auxiliary data received from the one or more auxiliary data sources 131 to identify one or more event parameters associated with the vehicle 102. In various embodiments, event parameters can include characteristics that can be associated with one or more defined events. Example event parameters can include, but are not limited to: a measured temperature, pressure, amount of light, moister level, and/or the like; detected motion; coordinates (e.g., denoted a geographical location); velocity (e.g., of the vehicle 102 and/or of an object in proximity to the vehicle 102); environmental conditions (e.g., characterizing an environment surrounding the vehicle 102); a criminality metric (e.g., as defined by auxiliary data from the one or more auxiliary data sources 131), infrastructure data (e.g., as defined by one or more traffic signs and/or signals), a combination thereof, and/or the like.

In one or more embodiments, the surveillance component 302 can identify one or more event parameters based on one or more components of the sensory data reaching a defined threshold. For example, an event parameter can be that it is raining at the vehicle's 102 location, where the surveillance component 302 can identify the "raining" event parameter based on a moisture level measured by a moisture sensor (e.g., of the one or more sensors 109) being greater than or equal to a defined moisture threshold. In another example, an event parameter can be that the vehicle 102 is overheating, where the surveillance component 302 can identify the "overheating" event parameter based on a temperature measured by an interior thermometer (e.g., of the one or more sensors 109) being greater than or equal to a defined temperature threshold. In a further example, an event parameter can be that the vehicle 102 is in a dimly lit location, where the surveillance component 302 can identify the "dimly lit" event parameter based on an amount of light measured by a light sensor (e.g., of the one or more sensors 109) being less than or equal to a defined light energy threshold.

In one or more embodiments, the surveillance component 302 can identify one or more event parameters from auxiliary data received from the one or more auxiliary data sources 131. For example, recent reports of criminal activity (e.g., from auxiliary data provided by the one or more auxiliary data sources 131) within a geographical range of the vehicle 102 can influence a criminality metric associated with the vehicle 102. For instance, as the number of reports of criminal activity within a defined time period increases, the value of the criminality metric can increase. Likewise, as the number of reports of criminal activity within the defined time period decreases, the value of the criminality metric can also decrease. In various embodiments, the surveillance component 302 can identify the criminality metric as an event parameter (e.g., via a continuous identification of the criminality metric and/or via an identification of the criminality metric as an event parameter based on the value of the criminality metric exceeding a defined threshold).

In one or more embodiments, the surveillance component 302 can execute one or more recognition machine learning tasks to identify one or more objects in proximity to the vehicle 102 as one or more event parameters. For example, the surveillance component 302 can employ image recognition software (e.g., executed via the processing unit 116 of the onboard vehicle system 104 and/or via the one or more AI models 132) to identify one or more objects captured in the sensory data (e.g., captured by one or more cameras of the sensors 109). In one or more embodiments, the surveillance component 302 can perform one or more object detection tasks, while the one or more AI models 132 can perform one or more object recognition tasks. For instance, the surveillance component 302 can extract one or more object features of image and/or video sensory data collected by the one or more sensors 109. The one or more object features can further be analyzed by one or more machine learning networks and/or deep learning networks (e.g., via the one or more AI models 132) to recognize the object based on the object features. In one or more embodiments, the surveillance component 302 (e.g., in conjunction with the one or more AI models 132) can identify objects included in the sensory data, such as, for example: buildings, other vehicles (e.g., automobiles, boats, bikes, and/or the like), people, landscape features (e.g., telephone phones, light poles, mailboxes, sidewalks, parking meters, docks, signs, fences, and/or the like), a combination thereof and/or the like.

In one or more embodiments, the surveillance component 302 can identify one or more event parameters based on motion detected in proximity to the vehicle 102. For example, the surveillance component 302 can analyze sensory data (e.g., images, video, and/or radar) collected by the one or more sensors 109 to detect the motion of one or more object and/or persons in proximity to the vehicle 102. For instance, the surveillance component 302 can identify any motion as an event parameter. In another instance, the surveillance component 302 can identify motion in a defined direction (e.g., towards or away from the vehicle 102) as an event parameter. In a further instance, the surveillance component 302 can identify motion associated with a recognized object as an event parameter. In a still further instance, the surveillance component 302 can identify motion in conjunction with one or more other sensory data points as an event parameter (e.g., such as motion during a defined time of day and/or night).

In various embodiments, the categorization component 304 can categorize the identified event parameters within one or more defined events. For example, the categorization component 304 can utilize the one or more AI models 132 to identify which event parameters can be associated with a defined event and/or which relationship (e.g., combination or lack thereof) of event parameters can be associated with a defined event. In one or more embodiments, the one or more AI models 132 can employ one or more knowledge graphs to represent relationships between event parameters, which can facilitate one or more event classification tasks.

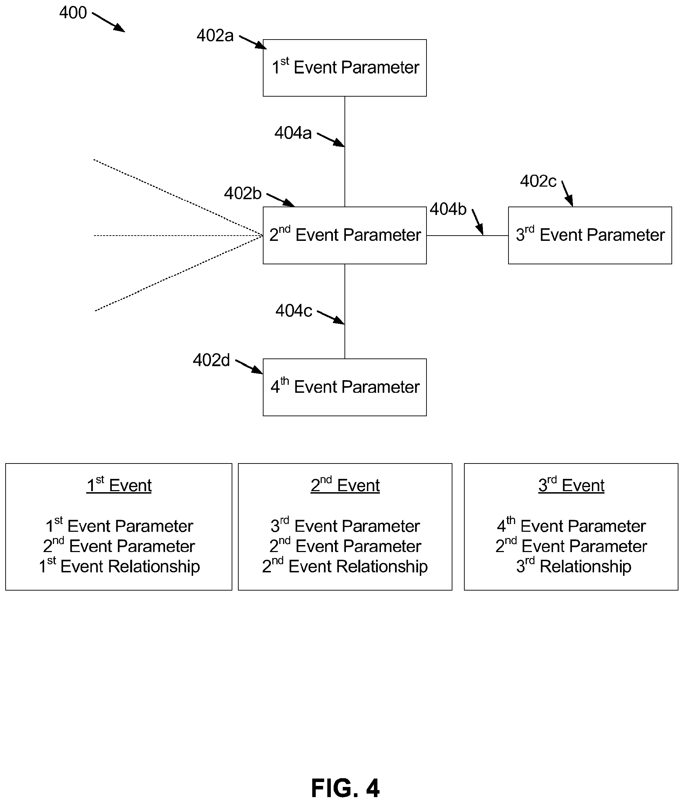

FIG. 4 illustrates a diagram of an example, non-limiting portion of an exemplary knowledge graph 400 that can be generated by the one or more AI models 132 and/or employed by the categorization component 304 to facilitate the one or more event categorization tasks in accordance with one or more embodiments described herein. Repetitive description of like elements employed in other embodiments described herein is omitted for sake of brevity. As shown in FIG. 4, the example knowledge graph 400 can comprise one or more nodes 402 interconnected via one or more edges 404. Each of the nodes 402 can be associated with a respective event parameter that can be identified by the surveillance component 302 from the sensory data and/or auxiliary data in accordance with one or more embodiments described herein.

For example, the exemplary knowledge graph 400 portion shown in FIG. 4 can include respective nodes 402 for a first event parameter (e.g., represented by node 402a), a second event parameter (e.g., represented by node 402b), a third vent parameter (e.g., represented by node 402c), and/or a fourth event parameter (e.g., represented by node 402d). Interconnecting edges 404 can represent one or more relationships (e.g., causal relationships) between the event parameters of connected nodes 402. For instance, edges 404 can be indicative that the connected event parameters can be associated with a defined event. In another instance, edges 404 can be indicative that an event parameter often precedes or follows one or more connected event parameters nodes 402. Additionally, the one or more edges 404 can be assigned one or more weight values to characterize a probability associated with the defined relationship. In various embodiments, the one or more AI models 132 can be trained on historic sensory data collected from the vehicle 102 and/or other vehicles. For instance, the one or more AI models 132 can be trained via one or more supervised learning techniques.

In various embodiments, multiple event parameters (e.g., represented by nodes 402) and/or event relationships (e.g., represented by edges 404) can be associated with one or more defined events. For example, FIG. 4 depicts an exemplary embodiment of the example knowledge graph 400 in which the first event parameter, second event parameter, and/or first event relationship (e.g., represented by edge 404a) can be associated with, and/or categorized within, a first defined event. Also, the third event parameter, second event parameter, and/or second event relationship (e.g., represented by 404b) can be associated with, and/or categorized within, a second defined event. Further, the fourth event parameter, second event parameter, and/or third event relationship (e.g., represented by 404c) can be associated with, and/or categorized within, a third defined event. Thus, identification of the second event parameter can indicate the occurrence, or likelihood, of the first, second, or third defined event, where: additional identification of the first event parameter can indicate the occurrence, or likelihood (e.g., based on the first event relationship), of the first defined event; additional identification of the third event parameter can indicate the occurrence, or likelihood (e.g., based on the second event relationship), of the second defined event; and/or additional identification of the fourth event parameter can indicate the occurrence, or likelihood (e.g., based on the third event relationship), of the third defined event.

In one or more embodiments, the events into which the event parameters can be categorized can be predefined via one or more supervised learning processes. The one or more predefined events can include activities directed to the vehicle 102, occupants of the vehicle 102, and/or objects and/or property in proximity to the vehicle 102. For instance, the one or more events can comprise various types of security risks, including, but not limited to: activities resulting in malicious damage to the vehicle 102 or nearby property, theft of the vehicle 102 or nearby property, theft of one or more objects from within the vehicle 102, vandalism, a combination thereof, and/or the like. In another instance, the one or more events can also comprise various types of security non-risk activities, including, but not limited to: receiving a parking ticket, a car wash, undergoing maintenance, a combination thereof, and/or the like. Further, the defined events can be labeled as example security risks or security non-risks.

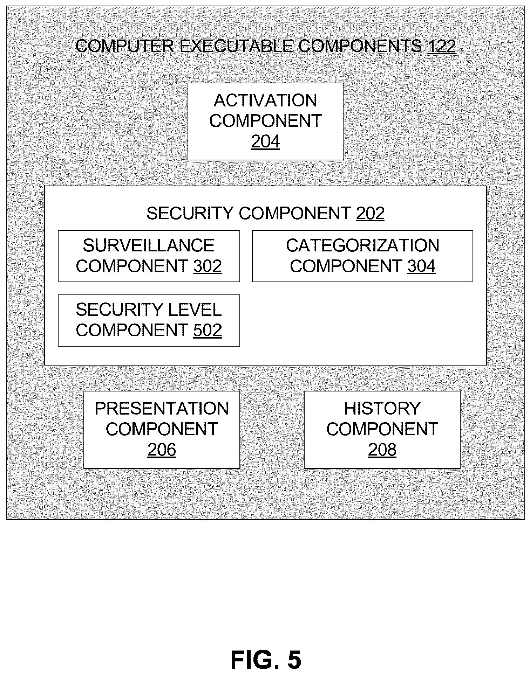

FIG. 5 illustrates a block diagram of example, non-limiting computer executable components 122 that can facilitate attributing one or more risk metric values to the event parameter identifications and/or event categorizations in accordance with one or more embodiments described herein. Repetitive description of like elements employed in other embodiments described herein is omitted for sake of brevity. As shown in FIG. 5, the security component 202 can further comprise security level component 502, which can determine one or more probability values associated with the one or more defined events derived from the categorization performed by the categorization component 304 and/or AI models 132.

In one or more embodiments, the security level component 502 can determine a probability associated with one or more of the defined events based on event parameters categorized to the defined events. For instance, where a defined event is associated with multiple possible event parameters; as more of the possible event parameters are identified from the sensory and/or auxiliary data, the probability value of the defined event can increase (e.g., denoting an increased likelihood that the defined event has occurred or will occur in the near future). Additionally, the probability values can be a function of weight values assigned to one or more event relationships (e.g., exemplified by edges 404 of the knowledge graph 400) associated with the given event. In various embodiments, the security level component 502 can assign probability values to both security risk events and security non-risk events. Alternatively, the security level component 502 can assign probability values to just security risk events.

In various embodiments, the security level component 502 can further determine a risk metric value based on the one or more defined events delineated by the categorized event parameters and/or the associate probability values. The risk metric can characterize a likelihood that the vehicle 102, or an entity (e.g., property, such as other vehicles) in proximity to the vehicle 102, is being subject to, or will be subject to, a security risk event. For example, as the value of the risk metric increases, the likelihood of one or more security risk events occurring in association with the vehicle 102 can also increase. For instance, the security level component 502 can aggregate the probability values associated with events categorized with event parameters from the sensory and/or auxiliary data.

In some embodiments, the probability of one or more security risk events can be offset by the probability of one or more security non-risks and vice versa. For example, consider an exemplary case where a security risk event and a non-security risk event have a given event parameter in common; however, the security risk event can have a greater respective probability value than the security non-risk event (e.g., perhaps the security risk event has numerous other associate event parameters identified from the sensory data, and/or the given event parameter has a stronger event relationship with event parameters associated with the security risk event). In such case, the security level component 502 can offset the probability of the security risk event with the probability of the security non-risk event by, for example: representing the security risk event probability with a positive value, representing the security non-risk event a negative value, and aggregating the probabilities to determine the risk metric value. Thereby, the risk metric value can reflect the higher likelihood of a security risk event occurring, while recognizing that the likelihood is diminished by the possibility that one or more of the identified event parameters can alternatively be contributed to a security non-risk.

In one or more embodiments, the security level component 502 can further augment the risk metric value based on auxiliary data from the one or more auxiliary data sources 131. For example, in accordance with various embodiments described herein, a criminality metric can be derived from one or more reports (e.g., crime reports) of the auxiliary data (e.g., via the surveillance component 302 and/or categorization component 304). In some examples, the security level component 502 can supplement the probability of one or more security risk events with the criminality metric. For instance, the likelihood of a security risk event occurring can increase in geographical areas associated with numerous reports of criminal activity. The security level component 502 can utilize the criminality metric to reflect this correlation by incorporating the criminality metric into the risk metric determination. For instance, the criminality metric can be aggregated with the event probabilities. In another instance, the criminality metric can serve as a multiplier to augment the event probability. Additionally, in various embodiments the criminality metric can be identified as an event parameter and/or can be incorporated into the one or more AI models 132 (e.g., the risk metric can influence the weight values of one or more event relationships represented in the knowledge graph).

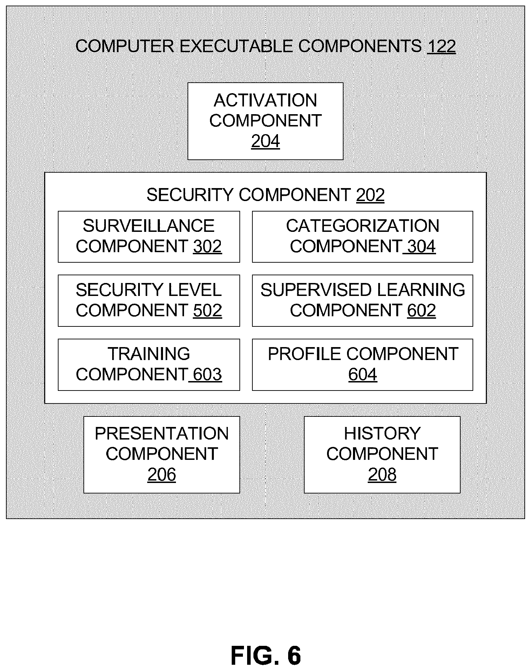

FIG. 6 illustrates a block diagram of example, non-limiting computer executable components 122 that can facilitate training and/or improving the one or more AI models 132 in accordance with one or more embodiments described herein. Repetitive description of like elements employed in other embodiments described herein is omitted for sake of brevity. As shown in FIG. 6, the security component 202 can further comprise supervised learning component 602, training component 603, and/or profile component 604. Although FIG. 6 depicts the supervised learning component 602 within the onboard vehicle system 104, the architecture of the system 100 is not so limited. For instance, embodiments in which the supervised learning component 602 is located external to the vehicle 102 in conjunction with the one or more AI models 132 are also envisaged.

In one or more embodiments, the supervised learning component 602 can identify one or more trends and/or patterns in the sensory data to generate a proposal for a new event to be included in the knowledge graph 400 employed by the one or more AI models 132 and/or for a modification to an existing event definition. For example, the supervised learning component 602 can analyze historic sensory data and/or identified event parameters stored by the history component 208 to identify one or more patterns and/or trends. For instance, the supervised learning component 602 can identify instances where a first event parameter of interest is followed by a second event parameter of interest within a defined time interval. Once the number of such instance exceeds a defined threshold, the supervised learning component 602 can determine that a correlation exists between the first event parameter and second event parameter of interest. Further, the supervised learning component 602 can repeat the analysis with one or more additional event parameters of interest to search for additional correlations.

Further, the supervised learning component 602 can generate one or more proposals delineating the one or more correlations derived from the historic data. Where the one or more correlations include event parameter combinations uncommon to existing defined events, the one or more proposals can include a recommendation to define a new event to associate with the one or more correlations. Where the one or more correlations include event parameter combinations that are elaborations upon those of existing defined events, the one or more proposals can include a recommendation to modify the definition of one or more events already recognized by the one or more AI models 132. In various embodiments, the supervised learning component 602 can share the one or more proposals with a subject matter expert (e.g., via the one or more networks 114 and/or external devices 112). The subject matter expert can evaluate the validity and/or accuracy of the proposals and decide to adopt or ignore the recommendations of the proposals. Where recommendations are adopted, the subject matter expert, or an associate administrative entity, can update the one or more AI models 132 to accommodate the new event definitions (e.g., can modify the one or more knowledge graphs to represent the one or more correlations identified from the historic data).

In one or more embodiments, the training component 603 can record sensory data collected by the one or more sensors 109 in accordance with a schedule. For example, the training component 603 can record sensory data collected at a defined time and/or date. Further, the activation component 204 can activate one or more the sensors 109 in accordance with the schedule to facilitate the collection of sensory data to be recorded by the training component 603. Additionally, the training component 603 can anonymize the recorded sensory data to remove content and/or characteristics that are deterministic of the sensory data's origin. For instance, the training component 603 can utilize data masking, pseudonymization, generalization, data swapping and/or data perturbation techniques to anonymize the recorded sensory data. The training component 603 can then transmit the anonymized sensory data to the one or more AI models 132 as a training dataset. In one or more embodiments, performance of the one or more AI models 132 can improve as the one or more AI models 132 are exposed to more training datasets. Once the anonymized sensory data is transmitted as training data, the training component 603 can delete and/or overwrite the recorded sensory data in accordance with one or more privacy compliance protocols.

In various embodiments, the profile component 604 can generate a security profile associated with the vehicle 102. Responses to the determined risk metric can vary based on the viewer's disposition to risk. The profile component 604 can track previous responses to risk metric presentations to determine risk preferences associated with one or more operators of the vehicle 102. Further, the profile component 604 can record the risk preferences within the security profile (e.g., which can be stored in the one or more memories 118). For example, the profile component 604 can identify when vehicle 102 operation changes in response to the presentation of the risk metric. For instance, the profile component 604 can identify when the speed of the vehicle 102 changes within a defined time interval after presentation of the risk metric. In another instance, the profile component 604 can identify when the direction and/or orientation of the vehicle 102 changes within a defined time interval after presentation of the risk metric. In a further instance, the profile component 604 can identify when a desired destination of the vehicle 102 (e.g., as set via one or more navigation systems) changes within a defined time interval after presentation of the risk metric. In a still further instance, the profile component 604 can identify when an operation of the one or more vehicle electronic systems/devices 108 changes within a defined time interval after presentation of the risk metric.

Where the profile component 604 identifies vehicle 102 operation changes in response to presentation of the risk metric, the profile component 604 can also record the value of the risk metric. Based on a history of the risk metric values stored by the profile component 604, the profile component 604 can determine one or more security preferences that delineate a risk metric value threshold that is likely to proctor a response by one or more operators of the vehicle 102. Thereby, the security preference can characterize when an operator of the vehicle 102 is likely to have increased interest in the value of the risk metric. Further, the profile component 604 can inform the presentation component 206 of the one or more security preferences, whereupon the presentation component 206 can alter the presentation of the risk metric based on the one or more security preferences (e.g., the presentation component 206 can render the risk metric more conspicuous to the operator based on the value of the risk metric being greater than the risk metric value threshold characterized by the security preference).

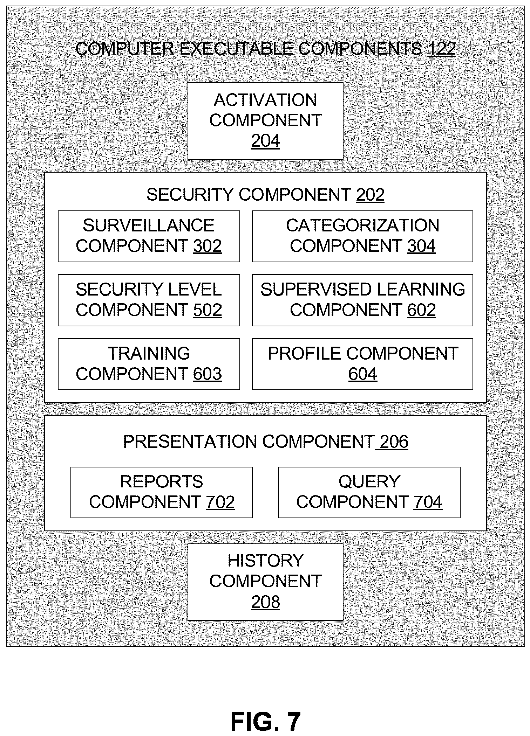

FIG. 7 illustrates a block diagram of example, non-limiting computer executable components 122 that can facilitate presenting the determine risk metric to one or more persons associated with the vehicle 102 in accordance with one or more embodiments described herein. Repetitive description of like elements employed in other embodiments described herein is omitted for sake of brevity. As shown in FIG. 7, the presentation component 206 can further comprise reports component 702 and/or query component 704.

In various embodiments, the reports component 702 can generate one or more reports comprising the risk metric value for presentation (e.g., via the one or more input devices 106 and/or external devices 112) to one or more persons associated with the vehicle 102 (e.g., the vehicle 102 operator). The one or more reports can include, for example, the risk metric value, collected sensory data, and/or received auxiliary data. Further, the one or more reports can present the risk metric value in one or more formats, including, but not limited to: text, graphs, charts, tables, videos, audio recordings, alerts, notifications, animations, a combination thereof, and/or the like. As described herein, in one or more embodiments the reports component 702 can generate and/or modify the one or more reports based on, for example, the one or more security preferences generated by the profile component 604.

In various embodiments, the query component 704 can manage one or more received sensory data retrieval requests that can originate from one or more entities of authority (e.g., via the one or more networks 114). Example entities of authority can include, but are not limited to: law enforcement organizations, judicial organizations, organizations of a governing body, authorized persons associated with the vehicle 102, a combination thereof, and/or the like. For instance, a law enforcement organization can submit a sensory data retrieval request to retrieve potential evidence regarding a crime. In another instance, an owner of the vehicle 102 can submit a sensory data retrieval request to retrieve monitor a present or past state of the vehicle 102. In one or more embodiments, the sensory retrieval request can be accompanied by credentials and/or encryptions to be validated by the query component 704 prior to compliance with the sensory retrieval request. Once the credentials and/or encryptions are validated, the query component 704 can generate a digital package comprising historic sensory data (e.g., previously stored by the history component 208) described in the sensory data retrieval request.

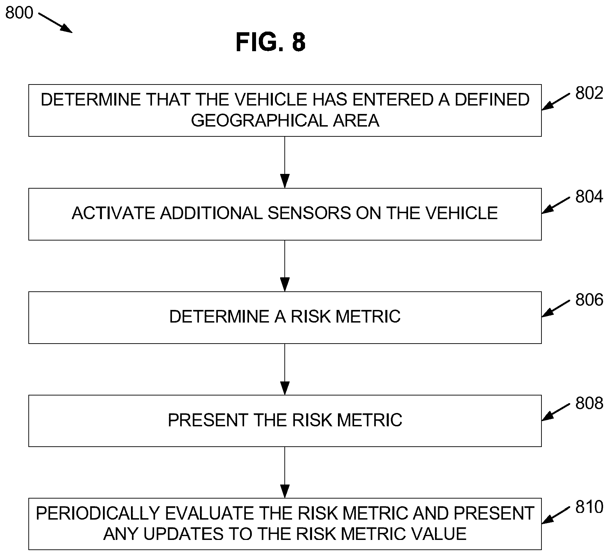

FIG. 8 illustrates a flow diagram of an example, non-limiting computer-implemented method 800 that can demonstrate an exemplary application of the system 100 in accordance with one or more embodiments described herein. Repetitive description of like elements employed in other embodiments described herein is omitted for sake of brevity.

At 802, the computer-implemented method 800 can comprise determining (e.g., via the one or more sensors 109), by an onboard vehicle system 104 operatively coupled to a processing unit 116, that a vehicle 102 has entered a defined geographical area (e.g., such as a city or suburb). At 804, the computer-implemented method 800 can comprise activating (e.g., via activation component 204), by the onboard vehicle system 104, additional sensors 109 on the vehicle 102. For example, activation of the additional sensors 109 can be triggered by the vehicle's 102 entry into the geographical area. For instance, additional sensors 109 can be activated to facilitate the collection of additional sensory data based on the vehicle 102 entering a geographical area that is not typically visited by the vehicle 102. The sensory data can regard, for instance, operation of the vehicle 102 and/or the surroundings of the vehicle 102.

At 806, the computer-implemented method 800 can comprise determining (e.g., via security component 202), by the onboard vehicle system 104, a risk metric in accordance with one or more embodiments described herein. For example, the determination at 806 can be based on the categorization of event parameters identified from sensory data collected from the one or more of the sensors 109 activated at 804. In one or more embodiments, the determination at 806 can employ one or more AI models 132. At 808, the computer-implemented method 800 can comprise presenting (e.g. via presentation component 206), by the onboard vehicle system 104, the risk metric determined at 806. For example, the risk metric can be presented to an operator of the vehicle 102 via one or more displays (e.g., comprised within one or more input devices 106 and/or external devices 112). In accordance with various embodiments described herein, the risk metric can characterize a likelihood that the vehicle 102 will be subject to one or more security risks based on the sensory data. At 810, the computer-implemented method 800 can comprise periodically evaluating (e.g., via the security component 202), by the onboard vehicle system 104, the risk metric and presenting any updates to the risk metric value.

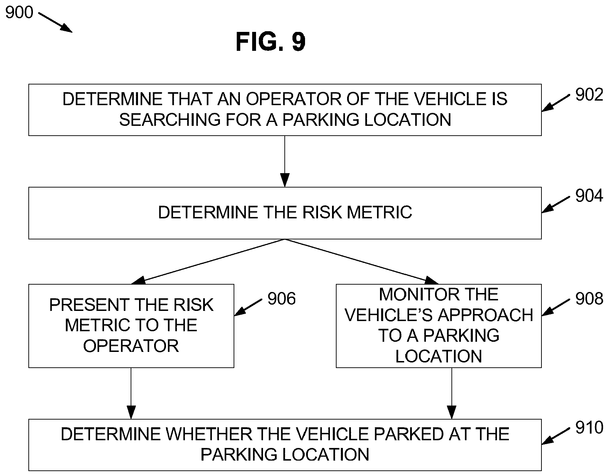

FIG. 9 illustrates a flow diagram of another example, non-limiting computer-implemented method 900 that can demonstrate an exemplary application of the system 100 in accordance with one or more embodiments described herein. Repetitive description of like elements employed in other embodiments described herein is omitted for sake of brevity.

At 902, the computer-implemented method 900 can comprise determining (e.g., via surveillance component 302), by an onboard vehicle system 104, that an operator of a vehicle 102 is searching for a parking location. For example, the determination at 902 can be based on sensory data collected by one or more sensors 109 on the vehicle 102. For instance, the surveillance component 302 can identify parking the vehicle 102 as an event parameter based the location of the vehicle 102 (e.g., in a parking garage), the speed of the vehicle 102, the orientation of the vehicle 102, a combination thereof, and/or the like. At 904, the computer-implemented method 900 can comprise determining (e.g., via security component 202), by the onboard vehicle system 104, a risk metric associated with the vehicle 102 during the parking search in accordance with one or more embodiments described herein.

Additionally, the computer-implemented method 900 can perform acts 906 and 908 concurrently and/or simultaneously. At 906, the computer-implemented method 900 can comprise presenting (e.g., via presentation component 206) the risk metric to the operator of the vehicle 102 (e.g., via one or more displays of the one or more input devices 106 and/or external devices 112). For instance, the risk metric can be presented to the vehicle 102 operator during and/or in preparation of the parking procedure. At 908, the computer-implemented method 900 can comprise monitoring (e.g., via surveillance component 302), by the onboard vehicle system 104, the vehicle's 102 approach to a parking location.

At 910, the computer-implemented method 900 can comprise determining (e.g., via the surveillance component and/or profile component 604), by the onboard vehicle system 104, whether the vehicle 102 parked at the parking location. In accordance with various embodiments described herein, the determination at 910 can characterize the prioritization of the risk metric to the vehicle 102 operator and/or can inform one or more security preferences.

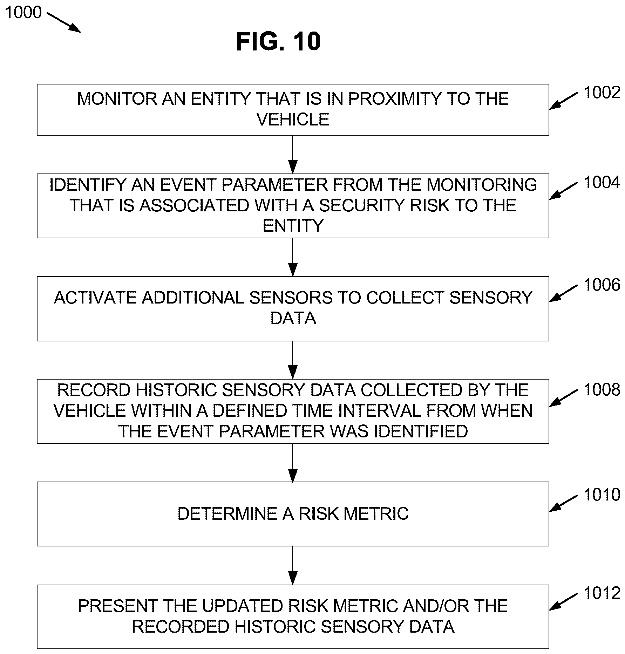

FIG. 10 illustrates a flow diagram of another example, non-limiting computer-implemented method 1000 that can demonstrate an exemplary application of the system 100 in accordance with one or more embodiments described herein. Repetitive description of like elements employed in other embodiments described herein is omitted for sake of brevity.

At 1002, the computer-implemented method 1000 can comprise monitoring (e.g., via surveillance component 302), by an onboard vehicle system 104 operatively coupled to a processing unit 116, an entity that is in proximity to the vehicle 102. For example, the vehicle 102 can be positioned near another vehicle (e.g., a docked boat) that can be monitored via sensory data collected by one or more sensors 109 of the vehicle 102 (e.g., the docked boat can be visible to one or more cameras of the vehicle 102). At 1004, the computer-implemented method 1000 can comprise identifying (e.g., via surveillance component 302), by the onboard vehicle system 104, one or more event parameters from the monitoring that is associated with a security risk event to the entity. For example, the identifying at 1004 can include the identification of an object in motion near the entity (e.g., such a person approaching the docked boat).

At 1006, the computer-implemented method 1000 can comprise activating (e.g., via activation component 204), by the onboard vehicle system 104, one or more additional sensors 109 to collect sensory data. For example, the monitoring at 1002 can be performed via a subset of sensors 109 comprised within the vehicle 102. At 1006, one or more remaining sensors 109 (e.g., other than those composed of the initial subset) can be activated to enhance surveillance of the entity. For instance, one or more additional cameras and/or microphones can be activated based on the one or more event parameters identified at 1004. At 1008, the computer-implemented method 1000 can comprise recording (e.g., via history component 208), by the onboard vehicle system 104, historic sensory data collected by the vehicle 102 within a defined time interval from when the event parameter was identified at 1004.

At 1010, the computer-implemented method 1000 can comprise determining (e.g., via security component 202), by the onboard vehicle system 104, a risk metric in accordance with various embodiments described herein. For example, the risk metric can be determined based on the event parameter identified at 1004 and/or additional sensory data recorded at 1008. Further, the risk metric can characterize the likelihood of a security risk to the entity in proximity to the vehicle 102 (e.g., where the event parameters regard surveillance of the docked boat, the risk metric can characterize the likelihood of a security risk to the boat). At 1012, the computer-implemented method 1000 can comprise presenting the risk metric (e.g., via the presentation component 206), by the onboard vehicle system 104, and/or the recorded historic sensory data to one or more persons associated with the vehicle 102 and/or an entity of authority (e.g., a law enforcement organization).

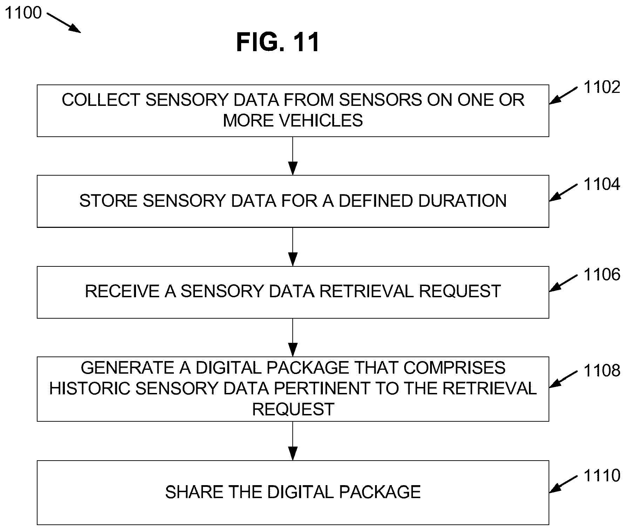

FIG. 11 illustrates a flow diagram of another example, non-limiting computer-implemented method 1100 that can demonstrate an exemplary application of the system 100 in accordance with one or more embodiments described herein. Repetitive description of like elements employed in other embodiments described herein is omitted for sake of brevity.

At 1102, the computer-implemented method 1100 can comprise collecting (e.g., via one or more sensors 109), by an onboard vehicle system 104 operatively coupled to a processing unit 116, sensory data from one or more sensors 109 located on, and/or within, one or more vehicle 102. At 1104, the computer-implemented method 1100 can comprise storing (e.g., via history component 208), by the onboard vehicle system 104, the sensory data for a defined duration. For example, the sensory data can be stored in one or more memories 118 for a set period of hours, days, and/or weeks.

At 1106, the computer-implemented method 1100 can comprise receiving (e.g., via communication unit 128 and/or one or more networks 114), by the onboard vehicle system 104, one or more sensory data retrieval requests. For example, the one or more sensory data retrieval requests can originate from one or entities of authority (e.g., a law enforcement agency) and can be entered into the system 100, by for example, one or more external devices 112. In accordance with various embodiments described herein, the one or more sensory data retrieval requests can describe one or more contexts (e.g., dates, times, and/or locations) for identifying historic sensory data pertinent to the sensory data retrieval request. At 1108, the computer-implemented method 1100 can comprise generating (e.g., via query component 704), by the onboard vehicle system 104, one or more digital packages that can comprise historic sensory data (e.g., stored via the history component 208) pertinent to the sensory data retrieval request. At 1110, the computer-implemented method 1100 can comprise sharing (e.g., via communication unit 128 and/or one or more networks 114), by the onboard vehicle system 104, the one or more digital packages with the requesting entity. In some embodiments, the computer-implemented method 1100 can further comprise anonymizing at least a portion of the digital package to comply with the sensory data retrieval request while preserving a privacy of the vehicle 102 and/or persons associated with the vehicle 102.

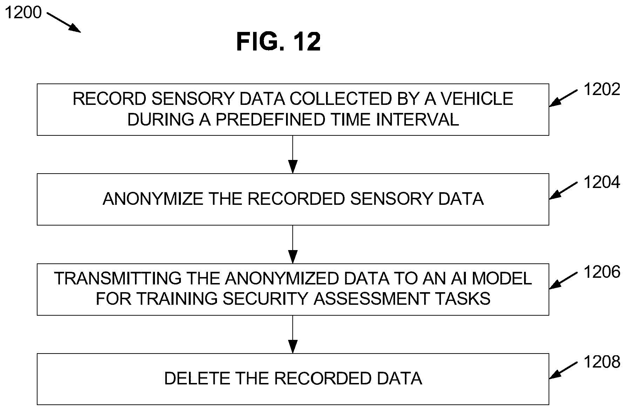

FIG. 12 illustrates a flow diagram of another example, non-limiting computer-implemented method 1200 that can demonstrate an exemplary application of the system 100 in accordance with one or more embodiments described herein. Repetitive description of like elements employed in other embodiments described herein is omitted for sake of brevity.

At 1202, the computer-implemented method 1200 can comprise recording (e.g., via training component 603), by an onboard vehicle system 104 operatively coupled to a processing unit 116, sensory data collected by a vehicle 102 during a predefined time interval. For example, the sensory data can be recorded in accordance with a defined schedule. At 1204, the computer-implemented method 1200 can comprise anonymizing (e.g., via training component 603), by the onboard vehicle system 104, the recorded sensory data. At 1206, the computer-implemented method 1200 can comprise transmitting (e.g., via training component 603, communication unit 128, and/or network 114), by the onboard vehicle system 104, the anonymized data to one or more AI models 132 for training the one or more AI models 132 for one or more security assessment tasks. For example, the one or more AI models 132 can utilize the anonymized sensory data as a training dataset to improve the various event parameter categorization techniques described herein. At 1208, the computer-implemented method 1200 can comprise deleting (e.g., via the training component 603 and/or the history component 208), by the onboard vehicle system 104, the recorded data.

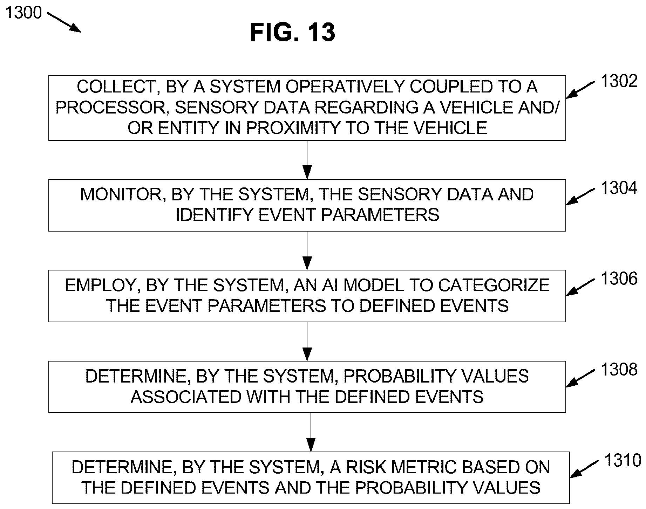

FIG. 13 illustrates a flow diagram of an example, non-limiting computer-implemented method 1300 that can determine a risk metric in accordance with one or more embodiments described herein. Repetitive description of like elements employed in other embodiments described herein is omitted for sake of brevity.

At 1302, the computer-implemented method 1300 can comprise collecting (e.g., via sensors 109 and/or activation component 204), by a system 100 operatively coupled to a processor (e.g., processing unit 116), sensory data regarding a vehicle 102 and/or an entity in proximity to the vehicle 102. At 1304, the computer-implemented method 1300 can comprise monitoring (e.g., via surveillance component 302), by the system 100, the sensory data and identifying one or more event parameters. For example, the surveillance component 302 can perform one or more object identification and/or recognition tasks in accordance with various embodiments described herein.

At 1306, the computer-implemented method 1300 can comprise employing (e.g., via categorization component 304), by the system 100, one or more AI models 132 to categorize the one or more event parameters to defined events. For example, the one or more AI models 132 can utilize one or more knowledge graphs representing event parameters and/or event relationships in accordance with one or more embodiments described herein. At 1308, the computer-implemented method 1300 can comprise determining (e.g., via security level component 502), by the system 100, one or more probability values associated with the defined events. For example, the one or more probability values can characterize a likelihood that the vehicle 102 will experience the defined event based on the identified and/or categorized event parameters. At 1310, the computer-implemented method 1300 can comprise determining (e.g., via security component 202), by the system 100, one or more risk metrics based on the one or more defined events and/or probability values.

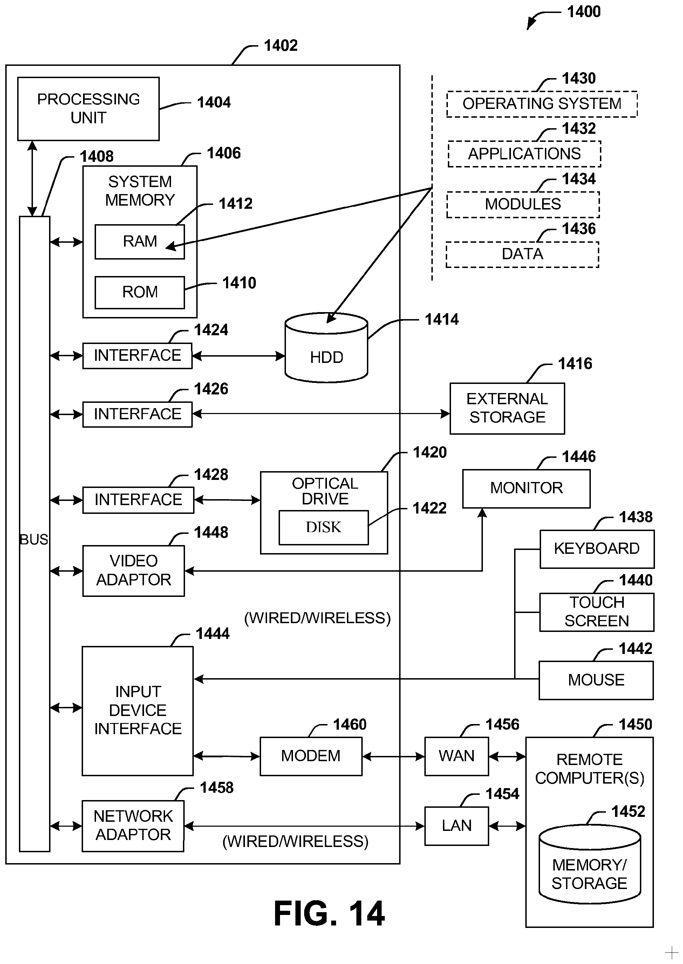

In order to provide additional context for various embodiments described herein, FIG. 14 and the following discussion are intended to provide a general description of a suitable computing environment 1400 in which the various embodiments of the embodiment described herein can be implemented. While the embodiments have been described above in the general context of computer-executable instructions that can run on one or more computers, those skilled in the art will recognize that the embodiments can be also implemented in combination with other program modules and/or as a combination of hardware and software.

Generally, program modules include routines, programs, components, data structures, and/or the like, that perform particular tasks or implement particular abstract data types. Moreover, those skilled in the art will appreciate that the inventive methods can be practiced with other computer system configurations, including single-processor or multiprocessor computer systems, minicomputers, mainframe computers, Internet of Things ("IoT") devices, distributed computing systems, as well as personal computers, hand-held computing devices, microprocessor-based or programmable consumer electronics, and the like, each of which can be operatively coupled to one or more associated devices.

The illustrated embodiments of the embodiments herein can be also practiced in distributed computing environments where certain tasks are performed by remote processing devices that are linked through a communications network. In a distributed computing environment, program modules can be located in both local and remote memory storage devices. For example, in one or more embodiments, computer executable components can be executed from memory that can include or be comprised of one or more distributed memory units. As used herein, the term "memory" and "memory unit" are interchangeable. Further, one or more embodiments described herein can execute code of the computer executable components in a distributed manner, e.g., multiple processors combining or working cooperatively to execute code from one or more distributed memory units. As used herein, the term "memory" can encompass a single memory or memory unit at one location or multiple memories or memory units at one or more locations.

Computing devices typically include a variety of media, which can include computer-readable storage media, machine-readable storage media, and/or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data or unstructured data.

Computer-readable storage media can include, but are not limited to, random access memory ("RAM"), read only memory ("ROM"), electrically erasable programmable read only memory ("EEPROM"), flash memory or other memory technology, compact disk read only memory ("CD-ROM"), digital versatile disk ("DVD"), Blu-ray disc ("BD") or other optical disk storage, magnetic cassettes, magnetic tape, magnetic disk storage or other magnetic storage devices, solid state drives or other solid state storage devices, or other tangible and/or non-transitory media which can be used to store desired information. In this regard, the terms "tangible" or "non-transitory" herein as applied to storage, memory or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

With reference again to FIG. 14, the example environment 1400 for implementing various embodiments of the aspects described herein includes a computer 1402, the computer 1402 including a processing unit 1404, a system memory 1406 and a system bus 1408. The system bus 1408 couples system components including, but not limited to, the system memory 1406 to the processing unit 1404. The processing unit 1404 can be any of various commercially available processors. Dual microprocessors and other multi-processor architectures can also be employed as the processing unit 1404.

The system bus 1408 can be any of several types of bus structure that can further interconnect to a memory bus (with or without a memory controller), a peripheral bus, and a local bus using any of a variety of commercially available bus architectures. The system memory 1406 includes ROM 1410 and RAM 1412. A basic input/output system ("BIOS") can be stored in a non-volatile memory such as ROM, erasable programmable read only memory ("EPROM"), EEPROM, which BIOS contains the basic routines that help to transfer information between elements within the computer 1402, such as during startup. The RAM 1412 can also include a high-speed RAM such as static RAM for caching data.

The computer 1402 further includes an internal hard disk drive ("HDD") 1414 (e.g., EIDE, SATA), one or more external storage devices 1416 (e.g., a magnetic floppy disk drive ("FDD") 1416, a memory stick or flash drive reader, a memory card reader, a combination thereof, and/or the like) and an optical disk drive 1420 (e.g., which can read or write from a disk 1422, such as: CD-ROM disc, a DVD, a BD, and/or the like). While the internal HDD 1414 is illustrated as located within the computer 1402, the internal HDD 1414 can also be configured for external use in a suitable chassis (not shown). Additionally, while not shown in environment 1400, a solid state drive ("SSD") could be used in addition to, or in place of, an HDD 1414. The HDD 1414, external storage device(s) 1416 and optical disk drive 1420 can be connected to the system bus 1408 by an HDD interface 1424, an external storage interface 1426 and an optical drive interface 1428, respectively. The interface 1424 for external drive implementations can include at least one or both of Universal Serial Bus ("USB") and Institute of Electrical and Electronics Engineers ("IEEE") 1394 interface technologies. Other external drive connection technologies are within contemplation of the embodiments described herein.

The drives and their associated computer-readable storage media provide nonvolatile storage of data, data structures, computer-executable instructions, and so forth. For the computer 1402, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 1412, including an operating system 1430, one or more application programs 1432, other program modules 1434 and program data 1436. All or portions of the operating system, applications, modules, and/or data can also be cached in the RAM 1412. The systems and methods described herein can be implemented utilizing various commercially available operating systems or combinations of operating systems.

Computer 1402 can optionally comprise emulation technologies. For example, a hypervisor (not shown) or other intermediary can emulate a hardware environment for operating system 1430, and the emulated hardware can optionally be different from the hardware illustrated in FIG. 14. In such an embodiment, operating system 1430 can comprise one virtual machine ("VM") of multiple VMs hosted at computer 1402. Furthermore, operating system 1430 can provide runtime environments, such as the Java runtime environment or the .NET framework, for applications 1432. Runtime environments are consistent execution environments that allow applications 1432 to run on any operating system that includes the runtime environment. Similarly, operating system 1430 can support containers, and applications 1432 can be in the form of containers, which are lightweight, standalone, executable packages of software that include, e.g., code, runtime, system tools, system libraries and settings for an application.

Further, computer 1402 can be enable with a security module, such as a trusted processing module ("TPM"). For instance with a TPM, boot components hash next in time boot components, and wait for a match of results to secured values, before loading a next boot component. This process can take place at any layer in the code execution stack of computer 1402, e.g., applied at the application execution level or at the operating system ("OS") kernel level, thereby enabling security at any level of code execution.

A user can enter commands and information into the computer 1402 through one or more wired/wireless input devices, e.g., a keyboard 1438, a touch screen 1440, and a pointing device, such as a mouse 1442. Other input devices (not shown) can include a microphone, an infrared ("IR") remote control, a radio frequency ("RF") remote control, or other remote control, a joystick, a virtual reality controller and/or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 1404 through an input device interface 1444 that can be coupled to the system bus 1408, but can be connected by other interfaces, such as a parallel port, an IEEE 1394 serial port, a game port, a USB port, an IR interface, a BLUETOOTH^{®} interface, and/or the like.

A monitor 1446 or other type of display device can be also connected to the system bus 1408 via an interface, such as a video adapter 1448. In addition to the monitor 1446, a computer typically includes other peripheral output devices (not shown), such as speakers, printers, a combination thereof, and/or the like.

The computer 1402 can operate in a networked environment using logical connections via wired and/or wireless communications to one or more remote computers, such as a remote computer(s) 1450. The remote computer(s) 1450 can be a workstation, a server computer, a router, a personal computer, portable computer, microprocessor-based entertainment appliance, a peer device or other common network node, and typically includes many or all of the elements described relative to the computer 1402, although, for purposes of brevity, only a memory/storage device 1452 is illustrated. The logical connections depicted include wired/wireless connectivity to a local area network ("LAN") 1454 and/or larger networks, e.g., a wide area network ("WAN") 1456. Such LAN and WAN networking environments are commonplace in offices and companies, and facilitate enterprise-wide computer networks, such as intranets, all of which can connect to a global communications network, e.g., the Internet.

When used in a LAN networking environment, the computer 1402 can be connected to the local network 1454 through a wired and/or wireless communication network interface or adapter 1458. The adapter 1458 can facilitate wired or wireless communication to the LAN 1454, which can also include a wireless access point ("AP") disposed thereon for communicating with the adapter 1458 in a wireless mode.

When used in a WAN networking environment, the computer 1402 can include a modem 1460 or can be connected to a communications server on the WAN 1456 via other means for establishing communications over the WAN 1456, such as by way of the Internet. The modem 1460, which can be internal or external and a wired or wireless device, can be connected to the system bus 1408 via the input device interface 1444. In a networked environment, program modules depicted relative to the computer 1402 or portions thereof, can be stored in the remote memory/storage device 1452. It will be appreciated that the network connections shown are example and other means of establishing a communications link between the computers can be used.

When used in either a LAN or WAN networking environment, the computer 1402 can access cloud storage systems or other network-based storage systems in addition to, or in place of, external storage devices 1416 as described above. Generally, a connection between the computer 1402 and a cloud storage system can be established over a LAN 1454 or WAN 1456 e.g., by the adapter 1458 or modem 1460, respectively. Upon connecting the computer 1402 to an associated cloud storage system, the external storage interface 1426 can, with the aid of the adapter 1458 and/or modem 1460, manage storage provided by the cloud storage system as it would other types of external storage. For instance, the external storage interface 1426 can be configured to provide access to cloud storage sources as if those sources were physically connected to the computer 1402.

The computer 1402 can be operable to communicate with any wireless devices or entities operatively disposed in wireless communication, e.g., a printer, scanner, desktop and/or portable computer, portable data assistant, communications satellite, any piece of equipment or location associated with a wirelessly detectable tag (e.g., a kiosk, news stand, store shelf, and/or the like), and telephone. This can include Wireless Fidelity ("Wi-Fi") and BLUETOOTH^{®} wireless technologies. Thus, the communication can be a predefined structure as with a conventional network or simply an ad hoc communication between at least two devices.

What has been described above include mere examples of systems, computer program products and computer-implemented methods. It is, of course, not possible to describe every conceivable combination of components, products and/or computer-implemented methods for purposes of describing this disclosure, but one of ordinary skill in the art can recognize that many further combinations and permutations of this disclosure are possible. Furthermore, to the extent that the terms "includes," "has," "possesses," and the like are used in the detailed description, claims, appendices and drawings such terms are intended to be inclusive in a manner similar to the term "comprising" as "comprising" is interpreted when employed as a transitional word in a claim. The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

Further aspects of the invention can be provided by the subject matter of the following clauses:
1. A system, comprising: a processor that executes computer executable components stored in a memory; and a security component that determines a risk metric associated with a vehicle at a defined time based on an artificial intelligence model, wherein the risk metric characterizes a probability that the vehicle, or an entity in proximity to the vehicle, will be subject to a security risk based on sensory data collected by the vehicle.
2. The system of clause 1, wherein the vehicle is equipped with one or more sensors that collect the sensory data regarding operation of the vehicle, surroundings of the vehicle, the entity in proximity to the vehicle, or combination thereof.
3. The system of any of the preceding clauses, wherein the sensory data comprises data selected from the group consisting of: a geographical location of the vehicle, a velocity of the vehicle, an orientation of the vehicle, an operating status of the vehicle, weather conditions surrounding the vehicle, lighting conditions surrounding the vehicle, and a classification of objects in proximity to the vehicle.
4. The system of any of the preceding clauses, wherein the security risk is an event selected from the group consisting of: malicious damage to the vehicle or the entity, theft of the vehicle or the entity, theft of an object within the vehicle, and vandalism.
5. The system of any of the preceding clauses, further comprising: a surveillance component that monitors the sensory data and identifies one or more event parameters associated with the vehicle or the entity at the defined time based on the sensory data; and a categorization component that employs the artificial intelligence model to categorize the one or more event parameters to a defined event, wherein the categorization component further labels the defined event as the security risk or security non-risk event.
6. The system of any of the preceding clauses, further comprising: a security level component that determines a probability value associated with the defined event based on the one or more event parameters categorized to the defined event.
7. The system of any of the preceding clauses, wherein the security level component further determines the risk metric based on the defined event and the probability value.
8. A computer-implemented method, comprising: determining, by a system operatively coupled to a processor, a risk metric associated with a vehicle at a defined time based on an artificial intelligence model, wherein the risk metric characterizes a probability that the vehicle, or an entity in proximity to the vehicle, will be subject to a security risk based on sensory data collected by the vehicle.
9. The computer-implemented method of clause 8, wherein the vehicle is equipped with one or more sensors that collect the sensory data regarding operation of the vehicle, surroundings of the vehicle, the entity in proximity to the vehicle, or combination thereof.
10. The computer-implemented method of any of the preceding clauses, wherein the sensory data comprises data selected from the group consisting of: a geographical location of the vehicle, a velocity of the vehicle, an orientation of the vehicle, an operating status of the vehicle, weather conditions surrounding the vehicle, lighting conditions surrounding the vehicle, and a classification of objects in proximity to the vehicle.
11. The computer-implemented method of any of the preceding clauses, further comprising: monitoring, by the system, the sensory data and identifies one or more event parameters associated with the vehicle or the entity at the defined time based on the sensory data.
12. The computer-implemented method of any of the preceding clauses, further comprising: employing, by the system, the artificial intelligence model to categorize the one or more event parameters to a defined event, and labeling, by the system, the defined event as the security risk or a security non-risk event.
13. The computer-implemented method of any of the preceding clauses, further comprising: determining, by the system, a probability value associated with the defined event based on the one or more event parameters categorized to the defined event.
14. The computer-implemented method of any of the preceding clauses, further comprising: determining, by the system, the risk metric based on the defined event and the probability value.
15. A computer program product for assessing vehicle security, the computer program product comprising a computer readable storage medium having program instructions embodied therewith, the program instructions executable by a processor to cause the processor to: determine, by the processor, a risk metric associated with a vehicle at a defined time based on an artificial intelligence model, wherein the risk metric characterizes a probability that the vehicle, or an entity in proximity to the vehicle, will be subject to a security risk based on sensory data collected by the vehicle.
16. The computer program product of claim 15, wherein the vehicle is equipped with one or more sensors that collect the sensory data regarding operation of the vehicle, surroundings of the vehicle, the entity in proximity to the vehicle, or combination thereof.
17. The computer program product of any of the preceding clauses, wherein the sensory data comprises data selected from the group consisting of: a geographical location of the vehicle, a velocity of the vehicle, an orientation of the vehicle, an operating status of the vehicle, weather conditions surrounding the vehicle, lighting conditions surrounding the vehicle, and a classification of objects in proximity to the vehicle.
18. The computer program product of any of the preceding clauses, wherein the program instructions further cause the processor to: monitor, by the processor, the sensory data and identifies one or more event parameters associated with the vehicle or the entity at the defined time based on the sensory data; employ, by the processor, the artificial intelligence model to categorize the one or more event parameters to a defined event; and label, by the processor, the defined event as the security risk or a security non-risk event.
19. The computer program product of any of the preceding clauses, wherein the program instructions further cause the processor to: determine, by the processor, a probability value associated with the defined event based on the one or more event parameters categorized to the defined event.
20. The computer program product of any of the preceding clauses, wherein the program instructions further cause the processor to: determine, by the processor, the risk metric based on the defined event and the probability value.

## Claims

1. A system, comprising:
a processor that executes computer executable components stored in a memory; and
a security component that determines a risk metric associated with a vehicle at a defined time based on an artificial intelligence model, wherein the risk metric characterizes a probability that the vehicle, or an entity in proximity to the vehicle, will be subject to a security risk based on sensory data collected by the vehicle.

2. The system of claim 1, wherein the vehicle is equipped with one or more sensors that collect the sensory data regarding operation of the vehicle, surroundings of the vehicle, the entity in proximity to the vehicle, or combination thereof.

3. The system of claim 2, wherein the sensory data comprises data selected from the group consisting of: a geographical location of the vehicle, a velocity of the vehicle, an orientation of the vehicle, an operating status of the vehicle, weather conditions surrounding the vehicle, lighting conditions surrounding the vehicle, and a classification of objects in proximity to the vehicle.

4. The system of claim 1, wherein the security risk is an event selected from the group consisting of: malicious damage to the vehicle or the entity, theft of the vehicle or the entity, theft of an object within the vehicle, and vandalism.

5. The system of claim 2, further comprising:
a surveillance component that monitors the sensory data and identifies one or more event parameters associated with the vehicle or the entity at the defined time based on the sensory data; and
a categorization component that employs the artificial intelligence model to categorize the one or more event parameters to a defined event, wherein the categorization component further labels the defined event as the security risk or security non-risk event.

6. The system of claim 5, further comprising:
a security level component that determines a probability value associated with the defined event based on the one or more event parameters categorized to the defined event.

7. The system of claim 6, wherein the security level component further determines the risk metric based on the defined event and the probability value.

8. A computer-implemented method, comprising:
determining, by a system operatively coupled to a processor, a risk metric associated with a vehicle at a defined time based on an artificial intelligence model, wherein the risk metric characterizes a probability that the vehicle, or an entity in proximity to the vehicle, will be subject to a security risk based on sensory data collected by the vehicle.

9. The computer-implemented method of claim 8, further comprising:
monitoring, by the system, the sensory data and identifies one or more event parameters associated with the vehicle or the entity at the defined time based on the sensory data.

10. The computer-implemented method of claim 9, further comprising:
employing, by the system, the artificial intelligence model to categorize the one or more event parameters to a defined event, and
labeling, by the system, the defined event as the security risk or a security non-risk event.

11. The computer-implemented method of claim 10, further comprising:
determining, by the system, a probability value associated with the defined event based on the one or more event parameters categorized to the defined event.

12. The computer-implemented method of claim 11, further comprising:
determining, by the system, the risk metric based on the defined event and the probability value.

13. A computer program product for assessing vehicle security, the computer program product comprising a computer readable storage medium having program instructions embodied therewith, the program instructions executable by a processor to cause the processor to:
determine, by the processor, a risk metric associated with a vehicle at a defined time based on an artificial intelligence model, wherein the risk metric characterizes a probability that the vehicle, or an entity in proximity to the vehicle, will be subject to a security risk based on sensory data collected by the vehicle.

14. The computer program product of claim 13, wherein the program instructions further cause the processor to:
monitor, by the processor, the sensory data and identifies one or more event parameters associated with the vehicle or the entity at the defined time based on the sensory data;
employ, by the processor, the artificial intelligence model to categorize the one or more event parameters to a defined event; and
label, by the processor, the defined event as the security risk or a security non-risk event.

15. The computer program product of claim 14, wherein the program instructions further cause the processor to:
determine, by the processor, a probability value associated with the defined event based on the one or more event parameters categorized to the defined event.
